# EUROPEAN PATENT APPLICATION

(11) **EP 0 842 871 A1**
(43) Date of publication of application: **20.05.1998**
(21) Application number: 97202921.9
(22) Date of filing: 24.09.1997
(51) Int. Cl.: B65F 1/14

(54) **Refuse collecting system with a container comprising positioning means**

(30) Priority: 24.09.1996 NL 1004104
(71) Applicant: Kliko Milieutechniek B.V., 3905 TG Veenendaal (NL)
(72) Inventor: Achterberg, Willem Jan, 3906 NB Veenendaal (NL)
(74) Representative: de Bruijn, Leendert C.

(57) **Abstract**

A refuse system for collecting and removing refuse, such as glass, paper and the like, comprising a container (1) which can be installed on an installation surface, such as a road surface, pavement or a cavity provided therein and in which the refuse can be collected, as well as at least one vehicle, which is provided with lifting means, and a loading chamber, it being possible to couple the lifting means to the container in order to raise the container and unload the container into the loading chamber. Container and installation surface possess positioning means (6,9) for placing the container in a fixed position with respect to the installation surface. In particular, the mutually facing sides of installation surface and container may be shaped such that they fit into one another in a corresponding manner.

## Description

The invention relates to a refuse system for collecting and removing refuse, such as glass, paper and the like, comprising a container which can be installed on an installation surface, such as a road surface, pavement or a cavity provided therein and in which the refuse can be collected, as well as at least one vehicle, which is provided with lifting means, and a loading chamber, it being possible to couple the lifting means to the container in order to raise the container and unload the container into the loading chamber.

A refuse system of this kind is known. From time to time, the associated containers are emptied by means of the vehicle, which positions itself close to the relevant container, whereupon the lifting means are attached. In this regard, the known refuse system is labour-intensive. The crew manning the vehicle must repeatedly attach the containers to the lifting means, which moreover is time-consuming.

With the object of providing an improvement in this regard, it has already been proposed to equip the vehicle with lifting means which are self-connecting, i.e. which can be attached by the driver of the vehicle without him having to leave his seat to do so. For this purpose, the vehicle is positioned close to the container which, however, does have to be in a rather accurately defined position in order to allow the attachment to take place.

The problem with this known refuse system is that when the container is being replaced it is generally not possible to achieve this reproducible, accurately defined position which is required in order to attach the container without the assistance of an operator.

The object of the invention is therefore to provide a refuse system which is more satisfactory in this respect. This object is achieved in that container and installation surface possess positioning means for placing the container in a fixed position with respect to the installation surface.

Due to the positioning means, the container is forced to assume the correct position when it is replaced on the installation surface, so that the desired level of reproducibility, which is necessary in order for the driver repeatedly to attach the container from a distance, is obtained. A method of this kind is not only easier for the operators but can also be carried out more quickly.

Positioning means of this kind can be realized in a simple manner if mutually facing sides of installation surface and container are shaped such that they fit into one another in a corresponding manner. The installation surface may be of at least partially convex form, and that side of the container which faces the installation surface may be of concave form.

According to a preferred embodiment, the mutually facing sides of installation surface and container are pyramidal. In this case, a pyramidal protrusion may be mounted on the installation surface, while a correspondingly shaped pyramid is then fastened beneath the bottom of the container.

Existing traditional containers can also be retrofitted with this system by fastening the four corners of the pyramid to the support legs of the container. As an alternative, positioning means can be integrated in the base of the container.

It is important, in connection with replacing the container at the correct position, that the installation surface does not become blocked with waste which has landed next to the container. Keeping the installation surface free of this refuse can be assisted if a fence is mounted thereon, which fence is positioned in such a manner with respect to the positioning means provided on the installation surface that the container which interacts with the said positioning means directly adjoins the said fence and the container has a lid, the hinge fastening of which is situated on that edge of the container which faces away from the said fence.

The invention will now be explained in more detail with reference to an exemplary embodiment depicted in the figures, in which:

Figure 1 shows a perspective view of a container, positioning means and fence.

Figure 2 shows a bottom view of the container, with positioning means.

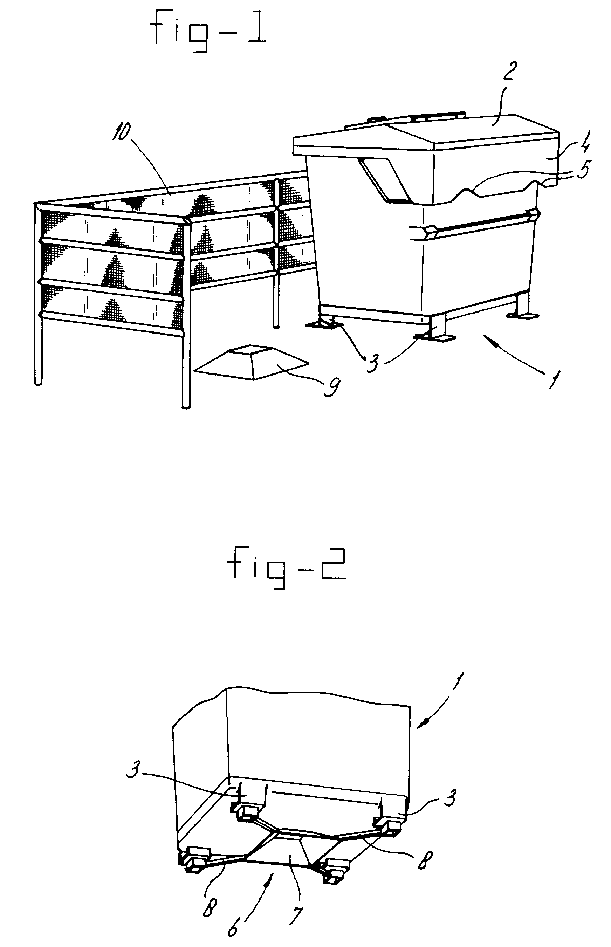

The refuse system depicted in Figures 1 and 2 comprises a container, which is denoted overall by 1 and is provided with a lid 2, legs 3 and a conventional lifting plate 4 with recesses 5 into which the lifting means of a refuse-collection vehicle (which incidentally is not shown) can be positioned.

A frustoconical positioning means 6, which is denoted overall by 6, is fastened to the underside of the container, in particular to the legs 3. This positioning means comprises the frustoconical plate 7, which is fastened to the legs 3 by means of struts 8.

As shown in Figure 1, a protrusion 9, which is likewise frustoconical, is fastened to the installation surface. When positioning the container 1 above the frustoconical plate 9, the correspondingly shaped plate 7 on the bottom of the container interacts therewith. On lowering the container 1 further onto its installation surface, the surfaces of the two pyramids guide the container into the correct position on the installation surface, and also with respect to the fence, which is denoted overall by 10. As a result, the driver of the refuse-collection vehicle can always reliably put the container 1 down at the same position, which facilitates picking it up again.

The fence 10 is positioned in such a manner with respect to the container that the public is able to take hold of the lid 2 and pivot it upwards. When waste is thrown in, the fence prevents waste which lands next to the container from passing beneath the latter, which would interfere with putting the container down subsequently. This is because any waste falls down on the side facing away from the container, minimizing problems with putting the latter down.

Needless to say, it should be noted that the positioning means can be used in recessed locations.

It is also possible to use a plurality of protrusions and recesses instead of a single pyramidal protrusion on the installation surface and an associated recess. It is also possible to use conical, elliptical, and the like, positioning means.

## Claims

1. Refuse system for collecting and removing refuse, such as glass, paper and the like, comprising a container (1) which can be installed on an installation surface, such as a road surface, pavement or a cavity provided therein and in which the refuse can be collected, as well as at least one vehicle, which is provided with lifting means, and a loading chamber, it being possible to couple the lifting means to the container (1) in order to raise the container (1) and unload the container (1) into the loading chamber, characterized in that container (1) and installation surface possess positioning means (6, 9) for placing the container (1) in a fixed position with respect to the installation surface.

2. Refuse system according to Claim 1, the mutually facing sides of installation surface and container (1) being shaped such that they fit into one another in a corresponding manner.

3. Refuse system according to Claim 2, the installation surface being of at least partially convex form, and that side of the container (1) which faces the installation surface being of concave form.

4. Refuse system according to Claim 2 or 3, the mutually facing sides of installation surface and container (1) being pyramidal or conical.

5. Refuse system according to Claim 4, a pyramidal or conical protrusion (9) being mounted on the installation surface.

6. Refuse system according to Claim 5, a correspondingly shaped pyramid or cone (7) being fastened beneath the bottom of the container.

7. Refuse system according to Claim 6, the pyramid (7) being fastened at its four corners to the support legs (3) of the container (1).

8. Refuse system according to one of the preceding claims, a fence (10) being mounted on the installation surface, which fence is positioned in such a manner with respect to the positioning means (9) provided on the installation surface that the container (1) which interacts with the said positioning means (9) directly adjoins the said fence (10) and the container (1) has a lid (2), the hinge fastening of which is situated on that edge of the container (1) which faces away from the said fence (10).
